# EUROPEAN PATENT APPLICATION

(11) **EP 4 672 355 A1**
(43) Date of publication of application: **31.12.2025**
(21) Application number: 23931705.0
(22) Date of filing: 11.08.2023
(51) Int. Cl.: H01M 4/131, H01M 4/36, H01M 4/505, H01M 4/525, H01M 10/0525

(54) **BATTERY CELL, BATTERY, AND ELECTRICAL DEVICE**

(30) Priority: 07.04.2023 CN 202310363528
(71) Applicant: Contemporary Amperex Technology Co., Limited, Ningde, Fujian 352100 (CN)
(72) Inventor: LIN, Chenhui, Ningde, Fujian 352100 (CN); HE, Jianfu, Ningde, Fujian 352100 (CN)
(74) Representative: Lorenz Seidler Gossel Part. mbB
(86) International application number: PCT/CN2023/112653
(87) International publication number: WO 2024/207655

(57) **Abstract**

The present application relates to the technical field of lithium batteries, and in particular to, a battery cell, a battery, and an electrical device. A positive electrode active material of the battery cell comprises a first lithium-nickel-cobalt-manganese oxide and a second lithium-nickel-cobalt-manganese oxide. A negative electrode active material comprises a silicon-based material and a carbon-based material. A molar content of nickel element in the second lithium-nickel-cobalt-manganese oxide is greater than that of nickel element in the first lithium-nickel-cobalt-manganese oxide among all transition metal elements, wherein the molar content of the nickel element in the second lithium-nickel-cobalt-manganese oxide among all transition metal elements is greater than or equal to 0.8. With the second lithium-nickel-cobalt-manganese oxide with a high nickel element content provided in the positive electrode active material according to the present application, during charging, voids created by shrinkage of a lattice of the second lithium-nickel-cobalt-manganese oxide may store an electrolytic solution squeezed out by expansion of negative electrode silicon, facilitating reflux of the electrolytic solution during a next charge, reducing lithium plating, and improving cycling performance of the battery cell.

## Description

### CROSS-REFERENCE TO RELATED APPLICATIONS

The present application claims priority to Chinese Patent Application No. 202310363528.4, filed on April 7, 2023 and entitled "BATTERY CELL, BATTERY, AND ELECTRICAL DEVICE", which is incorporated herein by reference in its entirety.

### TECHNICAL FIELD

The present application relates to the technical field of lithium batteries, and in particular, to a battery cell, a battery, and an electrical device.

### BACKGROUND

In recent years, with great development of lithium-ion batteries, the lithium-ion batteries are widely applicable in energy storage power systems such as hydroelectric, thermal, wind and solar power stations, as well as electric vehicles, electric tools, military equipment, aerospace, and other fields. When the lithium-ion batteries are applied in the field of electric vehicles such as electric bicycles, electric motorcycles, and electric cars, with the market's increasing requirements on the electric vehicle range, a graphite negative electrode has basically reached the gram capacity limit and can no longer meet the future demand for high-energy density battery cells.

Silicon material as a negative electrode material has ultra-high specific capacity, which is more than ten times the theoretical capacity of a traditional carbon-based material, has a discharge plateau comparable to that of the traditional carbon-based material, and therefore, is regarded as the first choice for negative electrode materials for next generation lithium-ion batteries. However, the silicon material as the negative electrode material is prone to great volumetric changes during charging and discharging, causing a sudden decrease in battery capacity and poor cycling performance.

### SUMMARY OF THE INVENTION

In view of this, the main technical problem to be solved by the present application is the problem that poorer battery cycling performance is caused by silicon material as a negative electrode material, thereby providing a battery cell, a battery, and an electrical device, allowing for improvement in the situation of untimely electrolytic solution reflux caused by the expansion of the silicon material, and helping improve the cycling performance of the battery cell.

A first aspect of the present application provides a battery cell, including a positive electrode plate and a negative electrode plate. The positive electrode plate includes a positive electrode active material, the positive electrode active material includes a first lithium-nickel-cobalt-manganese oxide and a second lithium-nickel-cobalt-manganese oxide, and a molar content of nickel element in the second lithium-nickel-cobalt-manganese oxide among all its transition metal elements is greater than that of nickel element in the first lithium-nickel-cobalt-manganese oxide among all its transition metal elements. In the second lithium-nickel-cobalt-manganese oxide, the molar content of the nickel element among all transition metal elements is greater than or equal to 0.8. The negative electrode plate includes a negative electrode active material, and the negative electrode active material includes a silicon-based material and a carbon-based material.

In the technical solution of the embodiments of the present application, the positive electrode active material of the battery cell contains therein a second lithium-nickel-cobalt-manganese oxide with a high nickel content, and a lattice of the second lithium-nickel-cobalt-manganese oxide shrinks significantly during charging. The situation where an electrolytic solution is squeezed out due to the expansion of the silicon-based material during charging may be improved. Voids formed by shrinkage of the lattice of the second lithium-nickel-cobalt-manganese oxide are used to store the electrolytic solution squeezed out, which facilitates reflux of the electrolytic solution to the negative electrode plate during discharging, thereby allowing for improvement in lithium plating during a next charge caused by untimely electrolytic solution reflux, and further allowing for improvement in the cycling performance of the battery cell.

In any of embodiments, a ratio of a mass fraction of the second lithium-nickel-cobalt-manganese oxide in the positive electrode active material to that of silicon element in the negative electrode active material is less than or equal to 10, and greater than 0. The mass fraction X2 of the second lithium-nickel-cobalt-manganese oxide in the positive electrode active material is related to the mass fraction X1 of the silicon element in the negative electrode active material, and the higher the silicon element content in the negative electrode active material, the higher the content of the second lithium-nickel-cobalt-manganese oxide in the positive electrode active material. In an Example of the present application, when Y = X2/X1 and 0 < Y ≤ 10, the cycling performance of the battery cell is good.

In any of embodiments, a ratio of a mass fraction of the second lithium-nickel-cobalt-manganese oxide in the positive electrode active material to that of silicon element in the negative electrode active material is less than or equal to 6, and greater than or equal to 4. When 4 ≤ Y ≤ 6, the cycling performance of the battery cell is better.

In any of embodiments, the mass fraction of the second lithium-nickel-cobalt-manganese oxide in the positive electrode active material is less than or equal to 50% and greater than 0. By reasonably controlling the content of the second lithium-nickel-cobalt-manganese oxide in the positive electrode active material, 0 < X2 ≤ 50%, the positive electrode active material is high in stability on the one hand, and on the other hand, the voids created by lattice shrinkage of the second lithium-nickel-cobalt-manganese oxide during charging facilitate storage of the electrolytic solution squeezed out by the expansion of the negative electrode active material, which facilitates the reflux of the electrolytic solution during discharging, improving the lithium plating situation, and bringing good cycling performance to the battery cell.

In any of embodiments, the mass fraction of the silicon element in the negative electrode active material is less than or equal to 10% and greater than 0. By reasonably controlling the content of the silicon element in the negative electrode active material, 0 < X1 ≤ 10%, it is possible to both improve the energy density of the battery cell and ensure stability of the negative electrode active material, resulting in good cycling performance of the battery cell.

In any of embodiments, in the first lithium-nickel-cobalt-manganese oxide, the molar content of the nickel element among all transition metal elements is less than or equal to 0.75, and greater than or equal to 0.5. By controlling the molar content of the nickel element among all transition metal elements in the first lithium-nickel-cobalt-manganese oxide, the positive electrode active material is good in stability and the battery cell is good in cycling performance.

In any of embodiments, the first lithium-nickel-cobalt-manganese oxide includes a first lithium nickel cobalt manganese oxide or a doped modified material of the first lithium nickel cobalt manganese oxide or a surface modified material of the first lithium nickel cobalt manganese oxide, and the first lithium nickel cobalt manganese oxide has a structural formula of LiNiₓCo_{y}Mn_{z}O₂, where x + y + z = 1, 0.5 ≤ x ≤ 0.75, 0.03 ≤ y ≤ 0.3, and 0.2 ≤ z ≤ 0.4. The doped modified material of the first lithium nickel cobalt manganese oxide may be a modified material with any one or several of titanium, zirconium, aluminum, magnesium, and lanthanum elements in trace amounts doped into the first lithium nickel cobalt manganese oxide. The surface modified material may be a modified material with any one or several of MgO, ZrO₂, TiO₂, Al₂O₃, AlPO₄, AlF₃, LiAlO₂, and LiTiO₂ coating the surface of the first lithium nickel cobalt manganese oxide, and the surface modified material is not limited in the technical solution of the present application. It should be noted that, after the battery cell in the embodiments of the present application is chemically formed or cycles at a later stage, an atomic number ratio of Li element among the atomic number ratios of the constituent elements of the first lithium nickel cobalt manganese oxide may be greater than 1, or less than 1 and greater than 0, and the atomic number ratio of O element may be greater than 2, or less than 2 and greater than 0.

In any of embodiments, the second lithium-nickel-cobalt-manganese oxide includes a second lithium nickel cobalt manganese oxide or a doped modified material of the second lithium nickel cobalt manganese oxide or a surface modified material of the second lithium nickel cobalt manganese oxide, and the second lithium nickel cobalt manganese oxide has a structural formula of LiNiₐCo_{b}Mn_{c}O₂, where a + b + c = 1, 0.8 ≤ a ≤ 0.98, 0.01 ≤ b ≤ 0.15, and 0.01 ≤ c ≤ 0.15. The doped modified material of the second lithium nickel cobalt manganese oxide may be a modified material with any one or several of titanium, zirconium, aluminum, magnesium, and lanthanum elements in trace amounts doped into the second lithium nickel cobalt manganese oxide. The surface modified material may be a modified material with any one or several of MgO, ZrO₂, TiO₂, Al₂O₃, AlPO₄, AlF₃, LiAlO₂, and LiTiO₂ coating the surface of the first lithium nickel cobalt manganese oxide, and the surface modified material is not limited in the technical solution of the present application. It should be noted that, after the battery cell in the embodiments of the present application is chemically formed or cycles at a later stage, an atomic number ratio of Li element among the atomic number ratios of the constituent elements of the first lithium nickel cobalt manganese oxide may be greater than 1, or less than 1 and greater than 0, and the atomic number ratio of O element may be greater than 2, or less than 2 and greater than 0.

In any of embodiments, a volume average particle size Dv50 of secondary particles of the first lithium-nickel-cobalt-manganese oxide is 3 microns to 5 microns. By controlling the volume average particle size Dv50 of the first lithium-nickel-cobalt-manganese oxide to be 3 microns to 5 microns such that specific surface area of the first lithium-nickel-cobalt-manganese oxide is within a preferred range, the first lithium-nickel-cobalt-manganese oxide has fewer side reactions when used as a positive electrode active material, and the cycling performance retention rate of the battery cell is high.

In any of embodiments, a volume average particle size Dv50 of secondary particles of the second lithium-nickel-cobalt-manganese oxide is 8 microns to 12 microns. By controlling the volume average particle size Dv50 of the second lithium-nickel-cobalt-manganese oxide to be 8 microns to 12 microns such that specific surface area of the second lithium-nickel-cobalt-manganese oxide is within a preferred range, the second lithium-nickel-cobalt-manganese oxide has a large site for lithiation and delithiation when used as a positive electrode active material, ensuring that the battery cell has good power performance.

In any of embodiments, a volume average particle size Dv50 of primary particles of the first lithium-nickel-cobalt-manganese oxide ranges from 1 micron to 3 microns.

In any of embodiments, a volume average particle size Dv50 of primary particles of the second lithium-nickel-cobalt-manganese oxide ranges from 100 nanometers to 500 nanometers.

In any of embodiments, a compacted density of the positive electrode plate is 2.8-3.7 g/cm³. The compacted density of the positive electrode plate is large, such that an energy density of the positive electrode plate increases.

In any of embodiments, the silicon-based material includes any one or several of silicon, a silicon-carbon composite material, silicon monoxide, and a silicon monoxide-carbon composite material.

In any of embodiments, the carbon-based material includes graphite.

A second aspect of the present application further provides a battery, including a battery cell according to the first aspect of the present application. The battery of the present application includes the battery cell provided by the present application, and thus has at least the same advantages as the battery cell.

A third aspect of the present application further provides an electrical device, including a battery cell according to the first aspect of the present application or a battery according to the second aspect of the present application. The electrical device of the present application includes the battery cell and/or the battery provided by the present application, and thus has at least the same advantages as the battery cell.

The present application has the following beneficial effect: different from the prior art, for the battery cell of the present application, with the second lithium-nickel-cobalt-manganese oxide with a high nickel content being contained in the positive electrode active material, the lattice of the second lithium-nickel-cobalt-manganese oxide shrinks significantly during charging. The situation where an electrolytic solution is squeezed out due to the expansion of the silicon-based material during charging may be improved. Voids formed by shrinkage of the lattice of the second lithium-nickel-cobalt-manganese oxide are used to store the electrolytic solution squeezed out, which facilitates reflux of the electrolytic solution to the negative electrode plate during discharging, thereby allowing for improvement in lithium plating during a next charge caused by untimely electrolytic solution reflux, and allowing for improvement in the cycling performance of the battery cell.

The above description is only an overview of the technical solution of the present application. In order to more clearly understand the technical means of the present application to implement same according to the contents of the Specification, and in order to enable the above and other objectives, features, and advantages of the present application to be more obvious and understandable, Detailed Description of the present application is hereby exemplarily described below.

### DESCRIPTION OF DRAWINGS

FIG. 1 is a structural schematic diagram of a battery cell according to an embodiment of the present application.
FIG. 2 is an exploded structural schematic diagram of a battery according to an embodiment of the present application.
FIG. 3a is a partial structural schematic diagram of an electrical device according to an embodiment of the present application.
FIG. 3b is a schematic diagram of an electrical device according to an embodiment of the present application.
FIG. 4a is a scanning electron microscope image of a first lithium nickel cobalt manganese oxide according to Example 1 of the present application.
FIG. 4b is another scanning electron microscope image of the first lithium nickel cobalt manganese oxide according to Example 1 of the present application.
FIG. 5a is a scanning electron microscope image of a second lithium nickel cobalt manganese oxide according to Example 1 of the present application.
FIG. 5b is another scanning electron microscope image of the second lithium nickel cobalt manganese oxide according to Example 1 of the present application.

### DETAILED DESCRIPTION

Hereinafter, embodiments of a battery cell, a battery, and an electrical device of the present application are described in detail and specifically disclosed with reference to the drawings as appropriate. However, there may be cases where unnecessary detailed descriptions are omitted. For example, there are cases where detailed descriptions of well-known items and repeated descriptions of actually identical structures are omitted. This is to avoid unnecessary redundancy in the following descriptions and to facilitate understanding by those skilled in the art. In addition, the drawings and subsequent descriptions are provided for those skilled in the art to fully understand the present application, and are not intended to limit the subject matter recited in the claims.

The "ranges" disclosed in the present application are defined in the form of lower and upper limits. A given range is defined by selecting a lower limit and an upper limit, and the selected lower and upper limits define the boundaries of the particular range. The range defined in this way may include or may not include end values, and may be arbitrarily combined, that is, any lower limit can be combined with any upper limit to form a range. For example, if the ranges 60-120 and 80-110 are listed for specific parameters, it is understood that the ranges 60-110 and 80-120 are also expected. In addition, if the listed minimum range values are 1 and 2 and if the listed maximum range values are 3, 4, and 5, the following ranges can all be expected: 1-3, 1-4, 1-5, 2-3, 2-4, and 2-5. In the present application, unless otherwise specified, the numerical range "a-b" represents an abbreviated representation of any combination of real numbers between a and b, wherein a and b are both real numbers. For example, the numerical range "0-5" indicates that all real numbers between "0-5" have been listed herein, and "0-5" is only a shortened representation of these numerical combinations. In addition, when a parameter is expressed as an integer greater than or equal to 2, it is equivalent to disclosing that the parameter is, for example, an integer of 2, 3, 4, 5, 6, 7, 8, 9, 10, 11, 12, and the like.

Unless otherwise specified, all the embodiments and optional embodiments of the present application can be combined with each other form new technical solutions.

Unless otherwise specified, all technical features and optional technical features of the present application may be combined with each other to form new technical solutions.

Unless otherwise particularly stated, all steps in the present application may be performed in sequence or randomly, preferably in sequence. For example, a method includes steps (a) and (b), meaning that the method may include steps (a) and (b) performed in sequence, or may include steps (b) and (a) performed in sequence. For example, the reference to the fact that the method may further include step (c) means that step (c) may be added to the method in any sequence. For example, the method may include steps (a), (b), and (c), or may include steps (a), (c), and (b), or may include steps (c), (a), and (b), or the like.

Unless otherwise particularly stated, the "including" and "comprising" mentioned in the present application mean being open, or being closed. For example, "including" and "containing" may indicate that it is possible to include or contain other components not listed, and it is also possible to include or contain only the listed components.

If not specifically stated, the term "or" is inclusive in the present application. For example, the phrase "A or B" means "A, B, or both A and B." More specifically, any one of the following conditions satisfies the condition "A or B": A is true (or present) and B is false (or absent); A is false (or absent) and B is true (or present); or both A and B are true (or present).

As a negative electrode active material, silicon undergoes great volumetric changes during charging and discharging, with a volume expansion rate of up to 300%, which brings about problems of particle pulverization and electrode plate expansion. Especially when it is used with a low-nickel ternary material (the content of nickel element among all transition metal elements is less than 0.8) as a positive electrode active material, electrolytic solution is squeezed out in large quantities, and the electrolytic solution cannot flow back timely during discharging, resulting in lithium plating, and causing sharp decay in the battery capacity and poor cycling performance.

On this basis, the present application provides a battery cell, including a positive electrode plate and a negative electrode plate. The positive electrode plate includes a positive electrode active material, the positive electrode active material includes a first lithium-nickel-cobalt-manganese oxide (NCM1) and a second lithium-nickel-cobalt-manganese oxide (NCM2), and a molar content of nickel element in the second lithium-nickel-cobalt-manganese oxide among all transition metal elements is greater than that of nickel element in the first lithium-nickel-cobalt-manganese oxide among all transition metal elements. In the second lithium-nickel-cobalt-manganese oxide, the molar content of the nickel element among all transition metal elements is greater than or equal to 0.8. The negative electrode plate includes a negative electrode active material, and the negative electrode active material includes a silicon-based material and a carbon-based material.

In an embodiment of the present application, the positive electrode active material of the battery cell contains therein the second lithium-nickel-cobalt-manganese oxide with a high nickel content, and a lattice of the second lithium-nickel-cobalt-manganese oxide shrinks significantly during charging, which may improve the situation where the electrolytic solution is squeezed out due to the expansion of the silicon-based material during charging. Voids formed by shrinkage of the lattice of the second lithium-nickel-cobalt-manganese oxide are used to store the electrolytic solution squeezed out, the shrinkage of the lattice of the second lithium-nickel-cobalt-manganese oxide facilitates reflux of the electrolytic solution to the negative electrode plate during discharging, thereby allowing for improvement in lithium plating during a next charge caused by untimely electrolytic solution reflux, and allowing for improvement in the cycling performance of the battery cell.

In an embodiment of the present application, the molar content of the nickel element in the first lithium-nickel-cobalt-manganese oxide (NCM1) among all transition metal elements is less than 0.8, and greater than 0. In an embodiment of the present application, the first lithium-nickel-cobalt-manganese oxide may be an oxide including lithium, nickel, cobalt, and manganese elements. The second lithium-nickel-cobalt-manganese oxide may also be an oxide including lithium, nickel, cobalt, and manganese elements.

In an embodiment of the present application, the positive electrode active material of the battery cell contains therein the second lithium-nickel-cobalt-manganese oxide with a high nickel content and the first lithium-nickel-cobalt-manganese oxide with a low nickel content. The first lithium-nickel-cobalt-manganese oxide has low activity and high stability during charging and discharging. During charging and discharging, as the reaction proceeds, the stability of the second lithium-nickel-cobalt-manganese oxide decreases. The positive electrode active material comprises the first nickel cobalt manganese oxide of low nickel and the second nickel cobalt manganese oxide of high nickel, such that the positive electrode active material has a mild overall activity and high stability, while the lattice of the second lithium-nickel-cobalt-manganese oxide shrinks during charging to form voids to store the electrolytic solution squeezed out by the expansion of silicon.

In an embodiment of the present application, the negative electrode active material includes a silicon-based material and a carbon-based material, where the carbon-based material has stable performance, and the silicon-based material is prone to expansion during charging and discharging. With the silicon-based material and the carbon-based material mixed for the negative electrode active material, on the other hand, the overall stability of the negative electrode active material may be improved; on the other hand, a theoretical capacity of the silicon-based material is high, up to 4200 mAh/g. Compared with graphite solely as the negative electrode active material, the addition of the silicon-based material may increase the theoretical capacity of the negative electrode active material.

For ease of description, a mass fraction of silicon element based on the total mass of the negative electrode active material is denoted by X1. The total mass of the negative electrode active material is a sum of the masses of the silicon-based material and the carbon-based material. A mass fraction of the second lithium-nickel-cobalt-manganese oxide based on the total mass of the positive electrode active material is denoted by X2. The total mass of the positive electrode active material is a sum of the mass of the first lithium-nickel-cobalt-manganese oxide and that of the second lithium-nickel-cobalt-manganese oxide. A ratio of the mass fraction of the second lithium-nickel-cobalt-manganese oxide in the positive electrode active material to that of silicon element in the negative electrode active material is denoted by Y, that is, Y = X2 / X1.

In some embodiments of the present application, the mass fraction X2 of the second lithium-nickel-cobalt-manganese oxide in the positive electrode active material is related to the mass fraction X1 of the silicon-based material in the negative electrode active material, and the higher the silicon element content in the negative electrode active material, the higher the content of the second lithium-nickel-cobalt-manganese oxide in the positive electrode active material.

In some embodiments of the present application, 0 < Y ≤ 10. When 0 < Y ≤ 10, the battery cell is good in cycling performance. During charging, the voids formed by the shrinkage of the lattice of the second lithium-nickel-cobalt-manganese oxide may store well the electrolytic solution squeezed out by the expansion of the silicon-based material. During charging, the expansion the lattice of the second lithium-nickel-cobalt-manganese oxide facilitates the reflux of the electrolytic solution. The positive electrode active material and the negative electrode active material have high stability, such that the cycling performance of the battery cell is good. A value for Y may be a numerical value of 0.1, 1, 1.5, 2, 2.4, 3, 3.2, 4, 4.8, 5, 5.1, 5.7, 6, 6.5, 7, 7.7, 8, 8.5, 9, 9.3, 10, or the like, or a range consisting of any two of the above numerical values, e.g. 1.5-3.2, 2-8, 7-9.3, or the like.

In some embodiments of the present application, when 4 ≤ Y ≤ 6, the cycling performance of the battery cell is better.

In some embodiments of the present application, 0 < X2 ≤ 50%. For example, X2 may be 0.001%, 0.1%, 1%, 5%, 6.3%, 8%, 10%, 15%, 18.5%, 20%, 25%, 30%, 33.2%, 35%, 38%, 40%, 42%, 44.5%, 45%, 47%, 50%, or the like, or a range consisting of any two of the above numerical values, e.g. 0.001%-5%, 6.3%-15%, 15%-20%, 25%-35%, 38%-42%, 45%-50%, or the like.

By reasonably controlling the content of the second lithium-nickel-cobalt-manganese oxide in the positive electrode active material such that 0 < X2 ≤ 50%, the positive electrode active material is high in stability on the one hand, and on the other hand, the voids created by lattice shrinkage of the second lithium-nickel-cobalt-manganese oxide during charging facilitate storage of the electrolytic solution squeezed out by the expansion of the negative electrode active material. During discharging, the expansion of the lattice of second lithium-nickel-cobalt-manganese oxide facilitates the reflux of the electrolytic solution, improving the lithium plating situation, and bringing good cycling performance to the battery cell.

In some embodiments of the present application, 0 < X1 ≤ 10%. By reasonably controlling the content of the silicon element in the negative electrode active material, 0 < X1 ≤ 10%, it is possible to both improve the energy density of the battery cell and ensure stability of the negative electrode active material, resulting in good cycling performance of the battery cell. For example, X1 may be 0.001%, 0.1%, 1%, 2%, 2.3%, 3%, 3.6%, 4%, 4.7%, 5%, 5.5%, 6%, 6.5%, 7%, 7.4%, 8%, 8.3%, 8.8%, 9%, 9.2%, 9.4%, 10%, or the like, or a range consisting of any two of the above numerical values, e.g. 0.001%-5%, 65.5%-10%, 2%-10%, 2%-8%, or the like.

In some embodiments of the present application, in the first lithium-nickel-cobalt-manganese oxide, the molar content of the nickel element among all transition metal elements is less than or equal to 0.75, and greater than or equal to 0.5. By controlling the molar content of the nickel element among all transition metal elements in the first lithium-nickel-cobalt-manganese oxide, the positive electrode active material is good in stability, facilitating improvement in the cycling performance of the battery cell. For example, the molar content of the nickel element among all transition metal elements may be 0.50, 0.51, 0.55, 0.6, 0.62, 0.65, 0.68, 0.7, 0.72, 0.75, or the like, or a range consisting of any two of the above numerical values, e.g. 0.51-0.65, 0.68-0.75, or the like.

In some embodiments of the present application, the first lithium-nickel-cobalt-manganese oxide includes a first lithium nickel cobalt manganese oxide or a doped modified material of the first lithium nickel cobalt manganese oxide or a surface modified material of the first lithium nickel cobalt manganese oxide, and the first lithium nickel cobalt manganese oxide has a structural formula of LiNiₓCo_{y}Mn_{z}O₂, where x + y + z = 1, 0.5 ≤ x ≤ 0.75, 0.03 ≤ y ≤ 0.3, and 0.2 ≤ z ≤ 0.4. The doped modified material of the first lithium nickel cobalt manganese oxide may be a modified material with a trace amount of metal elements, for example, possibly any one or several of titanium, zirconium, aluminum, magnesium, and lanthanum elements, doped in the first lithium nickel cobalt manganese oxide, where a molar content of the doped metal elements is less than or equal to 0.01. The surface modified material may be a modified material with other substances coating the surface of the first lithium nickel cobalt manganese oxide. In an embodiment of the present application, the first lithium nickel cobalt manganese oxide has little lattice change and strong stability during charging and discharging. The first lithium nickel cobalt manganese oxide includes but is not limited to at least one of LiNi_{0.6}Co_{0.2}Mn_{0.2}O₂ (also possibly abbreviated as N₆C₂M₂), LiNi_{0.5}Co_{0.2}Mn_{0.3}O₂ (also possibly abbreviated as N₅C₂M₃), LiNi_{0.7}Co_{0.1}Mn_{0.2}O₂ (also possibly abbreviated as N₇C₁M₂), and LiNi_{0.75}Co_{0.05}Mn_{0.2}O₂ (also possibly abbreviated as N_{7.5}C_{0.5}M_{2.5}).

In some embodiments of the present application, the second lithium-nickel-cobalt-manganese oxide includes a second lithium nickel cobalt manganese oxide or a doped modified material of the second lithium nickel cobalt manganese oxide or a surface modified material of the second lithium nickel cobalt manganese oxide, and the second lithium nickel cobalt manganese oxide has a structural formula of LiNiₐCo_{b}Mn_{c}O₂, where a + b + c = 1, 0.8 ≤ a ≤ 0.98, 0.01 ≤ b ≤ 0.15, and 0.01 ≤ c ≤ 0.15. The doped modified material of the second lithium nickel cobalt manganese oxide may be a modified material with any one or several of titanium, zirconium, aluminum, magnesium, and lanthanum elements doped in the second lithium nickel cobalt manganese oxide, and the molar content of the nickel element among all transition metal elements is less than or equal to 0.01. The surface modified material may be a modified material with other substances coating the surface of the second lithium nickel cobalt manganese oxide. In an embodiment of the present application, a crystal form of the second lithium nickel cobalt manganese oxide is of a hexagonal crystal form layered rock salt structure. During charging, Li⁺ in the layered rock salt structure of the second lithium nickel cobalt manganese oxide undergoes deintercalation, causing interlayer spacing of the layered rock salt structure to decrease and the lattice to shrink, and creating voids. The electrolytic solution squeezed out may be stored in the voids of the positive electrode plate. During discharging, Li⁺ is intercalated into the layered rock salt structure of the second lithium nickel cobalt manganese oxide, such that the lattice restores to an initial state or nearly restores to the initial state. The voids created by the second lithium nickel cobalt manganese oxide diminish, contributing to the reflux of the electrolytic solution.

In some embodiments of the present application, the second lithium nickel cobalt manganese oxide may include but is not limited to at least one of LiNi_{0.8}Co_{0.1}Mn_{0.1}O₂ (also possibly abbreviated as N₈C₁M₁), LiNi_{0.85}Co_{0.1}Mn_{0.05}O₂ (also possibly abbreviated as N_{8.5}C₁M_{0.5}), LiNi_{0.9}Co_{0.05}Mn_{0.05}O₂ (also possibly abbreviated as N₉C_{0.5}M_{0.5}), LiNi_{0.97}Co_{0.02}Mn_{0.01}O₂ (also possibly abbreviated as N_{9.7}C_{0.2}M_{0.1}), LiNi_{0.98}Co_{0.01}Mn_{0.01}O₂ (also possibly abbreviated as N_{9.8}C_{0.1}M_{0.1}), and LiNi_{0.98}Co_{0.01}Mn_{0.01}O₂ (also possibly abbreviated as N_{9.8}C_{0.1}M_{0.1}).

In some embodiments of the present application, a volume average particle size Dv50 of secondary particles of the first lithium-nickel-cobalt-manganese oxide is 3 microns to 5 microns. By controlling the volume average particle size Dv50 of the first lithium-nickel-cobalt-manganese oxide to be 3 microns to 5 microns such that specific surface area of the first lithium-nickel-cobalt-manganese oxide is within a preferred range, the first lithium-nickel-cobalt-manganese oxide has fewer side reactions when used as a positive electrode active material, and the cycling performance retention rate of the battery cell is high. The volume average particle size Dv50 of the first lithium-nickel-cobalt-manganese oxide may be 3 microns, 3.3 microns, 3.5 microns, 4 microns, 4.6 microns, 5 microns, or the like, or a range consisting of any two of the above numerical values, e.g. 3.3 microns-4.6 microns, 3.5 microns-4 microns, or the like.

In some embodiments of the present application, the volume average particle size Dv50 is common general knowledge in the art, has a known meaning in the art, and may be measured by means of methods and instruments in the art.

In some embodiments of the present application, a volume average particle size Dv50 of secondary particles of the second lithium-nickel-cobalt-manganese oxide is 8 microns to 12 microns. By controlling the volume average particle size Dv50 of the second lithium-nickel-cobalt-manganese oxide to be 8 microns to 12 microns such that specific surface area of the second lithium-nickel-cobalt-manganese oxide is within a preferred range, the second lithium-nickel-cobalt-manganese oxide has a large site for lithiation and delithiation when used as a positive electrode active material, ensuring that the battery cell has good power performance. The volume average particle size Dv50 of the second lithium-nickel-cobalt-manganese oxide may be 8 microns, 8.5 microns, 9 microns, 9.7 microns, 10 microns, 10.6 microns, 11 microns, 11.4 microns, 12 microns, or the like, or a range consisting of any two of the above numerical values, e.g. 8.5 microns-10.6 microns, 9 microns-11.4 microns, or the like.

In some embodiments of the present application, a volume average particle size Dv50 of primary particles of the first lithium-nickel-cobalt-manganese oxide is 1 microns to 3 microns. The volume average particle size Dv50 of the primary particles of the first lithium-nickel-cobalt-manganese oxide may be 1 microns, 1.5 microns, 2 microns, 2.2 microns, 2.5 microns, 3 microns, or the like, or a range consisting of any two of the above numerical values, e.g. 1.5 microns-2.5 microns, 2 microns-3 microns, or the like.

In some embodiments of the present application, a volume average particle size Dv50 of primary particles of the second lithium-nickel-cobalt-manganese oxide ranges from 100 nanometers to 500 nanometers. In an embodiment of the present application, the volume average particle size Dv50 of the primary particles of the second lithium-nickel-cobalt-manganese oxide is small, such that the formed secondary particles of the second lithium-nickel-cobalt-manganese oxide have a large specific surface area. The volume average particle size Dv50 of the primary particles of the second lithium-nickel-cobalt-manganese oxide may be 100 nanometers, 150 nanometers, 200 nanometers, 250 nanometers, 300 nanometers, 360 nanometers, 400 nanometers, 440 nanometers, 500 nanometers, or the like, or a range consisting of any two of the above numerical values, e.g. 150 nanometers-300 nanometers, 360 nanometers-500 nanometers, or the like.

In some embodiments of the present application, a compacted density of the positive electrode plate is 2.8 g/cm³-3.7 g/cm³. The compacted density of the positive electrode plate is large, facilitating increase in an energy density of the positive electrode plate. In an embodiment of the present application, the different particle sizes of the secondary particles of the first lithium-nickel-cobalt-manganese oxide and the second lithium-nickel-cobalt-manganese oxide facilitate improvement in the compacted density of the positive electrode plate. The compacted density of the positive electrode plate may be 2.8 g/cm³, 3.0 g/cm³, 3.1 g/cm³, 3.2 g/cm³, 3.3 g/cm³, 3.5 g/cm³, 3.6 g/cm³, 3.7 g/cm³, or the like, or a range consisting of any two of the above numerical values, e.g. 3.0 g/cm³-3.7 g/cm³, 2.8 g/cm³-3.3 g/cm³, or the like.

In some embodiments of the present application, the compacted density is common general knowledge in the art, has a known meaning in the art, and may be measured by means of methods and instruments in the art.

In some embodiments of the present application, the silicon-based material includes any one or several of silicon, a silicon-carbon composite material, silicon monoxide, and a silicon monoxide-carbon composite material. In an embodiment of the present application, the silicon-based material may be pure elemental silicon or pure silicon monoxide. The silicon-based material may further be an elemental silicon-carbon composite material, e.g. with a carbon layer coating the surface of silicon; or may be a silicon monoxide-carbon composite material, e.g. with a carbon layer coating the surface of silicon monoxide. In other Examples, the silicon-based material further includes a silicon-nitrogen composite and/or a silicon alloy.

In some embodiments of the present application, the carbon-based material includes graphite. In an embodiment of the present application, the graphite may be natural graphite or artificial graphite; the carbon-based material may further include soft carbon or hard carbon.

Additionally, the battery cell, the battery, and the electrical device of the present application is illustrated below by appropriately referring to the accompanying drawings.

In an embodiment of the present application, the battery cell refers to a smallest unit constituting a battery. The battery cell further includes an electrolyte and a separator. The separator is provided between a positive electrode plate and a negative electrode plate, serving mainly to prevent the positive and negative electrodes from short-circuiting, while allowing ions to pass through. During charging and discharging of the battery, active ions Li⁺ are intercalated and deintercalated back and forth between the positive electrode plate and the negative electrode plate, and the electrolyte plays a role in conducting ions between the positive electrode plate and the negative electrode plate.

The positive electrode plate includes a positive electrode current collector and a positive electrode film layer provided on at least one surface of the positive electrode current collector, and the positive electrode film layer includes the positive electrode active material according to the above embodiments of the present application.

As an example, the positive electrode current collector has two opposite surfaces in its own thickness direction, and the positive electrode film layer is provided on either or both of two opposite surfaces of the positive electrode current collector.

In some embodiments, the positive electrode current collector may be a metal foil or a composite current collector. For example, an aluminum foil may be used as the metal foil. The composite current collector may comprise a polymer material substrate layer and a metal layer formed on at least one surface of the polymer material substrate layer. The composite current collector may be formed by forming a metal material (such as aluminum, aluminum alloy, nickel, nickel alloy, titanium, titanium alloy, silver, and silver alloy) on a polymer material substrate (such as a substrate of polypropylene (PP), polyethylene terephthalate (PET), polybutylene terephthalate (PBT), polystyrene (PS), or polyethylene (PE)).

In some embodiments, the positive electrode film layer further optionally includes a binder. As an example, the binder may include at least one of polyvinylidene fluoride (PVDF), polytetrafluoroethylene (PTFE), a vinylidene fluoride-tetrafluoroethylene-propylene terpolymer, a vinylidene fluoride-hexafluoropropylene-tetrafluoroethylene terpolymer, a tetrafluoroethylene-hexafluoropropylene copolymer, and a fluorine-containing acrylate resin.

In some embodiments, the positive electrode film layer further optionally includes a conductive agent. As an example, the conductive agent may include at least one of superconducting carbon, acetylene black, carbon black, Ketjen black, carbon dots, carbon nanotubes, graphene, and carbon nanofibers.

In some embodiments, the positive electrode plate may be prepared by: dispersing the above components for preparing the positive electrode plate, e.g. the positive electrode active material, the conductive agent, the binder, and any other component, in a solvent (e.g. N-methyl pyrrolidone) to form a positive electrode slurry; and coating the positive electrode current collector with the positive electrode slurry, and performing drying, cold pressing, and other procedures to obtain the positive electrode plate.

The negative electrode plate includes a negative electrode current collector and a negative electrode film layer provided on at least one surface of the negative electrode current collector, and the negative electrode film layer includes the negative electrode active material according to the above embodiments.

As an example, the negative electrode current collector has two opposite surfaces in its own thickness direction, and the negative electrode film layer is provided on either or both of two opposite surfaces of the negative electrode current collector.

In some embodiments, the negative electrode current collector may be a metal foil or a composite current collector. For example, a copper foil may be used as the metal foil. The composite current collector can comprise a polymer material substrate layer and a metal layer formed on at least one surface of the polymer material substrate. The composite current collector may be formed by forming a metal material (copper, a copper alloy, nickel, a nickel alloy, titanium, a titanium alloy, silver, a silver alloy, or the like) on a high molecular material substrate (a substrate such as polypropylene (PP), polyethylene terephthalate (PET), polybutylene terephthalate (PBT), polystyrene (PS), and polyethylene (PE)).

In some embodiments, the negative electrode film layer further optionally includes a binder. The binder may be selected from at least one of styrene butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer further optionally comprises a conductive agent. The conductive agent may be selected from at least one of superconducting carbon, acetylene black, carbon black, Ketjen black, carbon dots, carbon nanotubes, graphene, and carbon nanofibers.

In some of embodiments, the negative electrode film layer further optionally includes other auxiliary agents, e.g., a thickener (e.g. sodium carboxymethyl cellulose (CMC-Na)) or the like.

In some embodiments, the negative electrode plate may be prepared by: dispersing the above components for preparing the negative electrode plate, e.g. the negative electrode active material, the conductive agent, the binder, and any other component, in a solvent (e.g. deionized water) to form a negative electrode slurry; and coating the negative electrode current collector with the negative electrode slurry, and performing drying, cold pressing, and other procedures to obtain the negative electrode plate.

An electrolytic solution plays a role of conducting ions between the positive electrode plate and the negative electrode plate. A type of the electrolytic solution is not specifically limited in the present application, and may be selected as required.

in some embodiments, the electrolytic solution includes an electrolyte salt and a solvent.

In some embodiments, the electrolyte salt may be selected from at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluoro bis(oxalato)phosphate, and lithium tetrafluoro(oxalato)phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, methylsulfonylmethane, ethyl methyl sulfone, and ethylsulfonylethane.

In some embodiments, the electrolyte solution may further optionally include an additive. For example, the additive may include a negative electrode film-forming additive and a positive electrode film-forming additive and may further include an additive that can improve certain performances of the battery, e.g., an additive that improves the overcharging performance of the battery and an additive that improves the high- or low-temperature performance of the battery.

In some embodiments, the battery cell further includes therein a separator. A type of the separator is not particularly limited in the present application, and any well-known separator having good chemical stability, mechanical stability, and a porous structure may be selected.

In some embodiments, the material of the separator can be selected from at least one of glass fibers, non-woven fabric, polyethylene, polypropylene, and polyvinylidene fluoride. The separator can be either a single-layer thin film or a multilayer composite thin film without special limitations. When the separator is a multilayer composite thin film, the layers may be the same or different with respect to material, without special limitations.

In some embodiments, the positive electrode plate, the negative electrode plate, and the separator may be made into a cell assembly through a winding process or a lamination process.

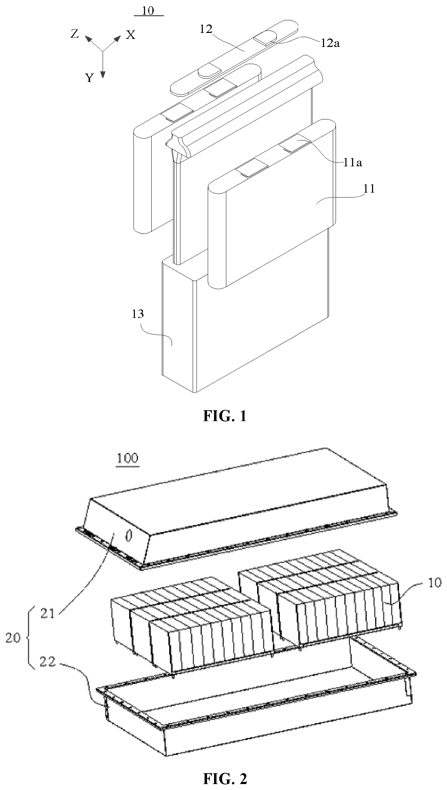

In some embodiments, as shown in FIG. 1, the battery cell 10 may include an outer package. The outer package may be used for encapsulating the above-mentioned cell assembly 11 and an electrolytic solution. The outer package includes an end cover 12, a case 13, and other functional components.

The end cover 12 refers to a component that covers an opening of the case 13 to isolate an internal environment of the battery cell 10 from an external environment. Without limitation, the shape of the end cover 12 may be adapted to that of the case 13 to fit the case 13. Optionally, the end cover 12 may be made of a material (such as an aluminum alloy) with a certain hardness and strength, and in this way, the end cover 12 is not easily deformed when subjected to extrusion and collisions, such that the battery cell 10 is capable of having a higher structural strength, and the safety performance may also be improved. A functional component such as an electrode terminal 12a may be provided on the end cover 12. The electrode terminal 12a may be used for being electrically connected to the cell assembly 11 for outputting or inputting electric energy of the battery cell 10. In some embodiments, a pressure relief mechanism, which is used to release an internal pressure when the internal pressure or temperature of the battery cell 10 reaches a threshold, may be further provided on the end cover 12. The end cover 12 may be made of various materials, such as copper, iron, aluminum, stainless steel, an aluminum alloy, and plastic, which is not specially limited in the embodiments of the present application. In some embodiments, an insulating member (not shown) may be further provided on an inner side of the end cover 12, and the insulating member may be used for isolating an electrical connection component within the case 13 from the end cover 12, to reduce the risk of short circuit. Exemplarily, the insulating member may be plastic, rubber, or the like.

The case 13 is an assembly for fitting the end cover 12 to form the internal environment of the battery cell 10, where the formed internal environment may be used to accommodate the cell assembly 11, the electrolytic solution, and other components. The case 13 and the end cover 12 may be separate components, the case 13 may be provided with an opening, and the internal environment of the battery cell 10 is formed by causing the end cover 12 to cover the opening at the opening. Without limitation, the end cover 12 and the case 13 may also be integrated. Specifically, the end cover 12 and the case 13 may form one common connection face before other components are put into the case. When the interior of the case 13 needs to be encapsulated, the end cover 12 is then caused to cover the case 13. The case 13 may be in various shapes and various sizes, such as a cuboid shape, a cylinder shape, and a hexagonal prism shape. Specifically, the shape of the case 13 may be determined according to the specific shape and size of the cell assembly 11. The case 13 may be made of various materials, such as copper, iron, aluminum, stainless steel, an aluminum alloy, and plastic, which is not specially limited in the embodiments of the present application.

One or more cell assemblies 11 may be contained within the case 13. Portions of the positive electrode plate and the negative electrode plate that do not have active material each constitute a tab 11a. The positive electrode tab and the negative electrode tab may be co-located at one end of a body portion or located at two ends of the body portion, respectively. During charging and discharging of the battery, the positive electrode active material and the negative electrode active material react with the electrolytic solution, and the tabs 11a are connected to the electrode terminals to form a current loop.

Referring to FIG. 2, FIG. 2 is an exploded structural schematic view of a battery 100 provided in some embodiments of the present application. The battery 100 includes a box 20 and a battery cell 10, and the battery cell 10 is accommodated within the box 20. The box 20 is used to provide an accommodating space for the battery cell 10, and the box 20 may be of various structures. In some embodiments, the box 20 may include a first portion 21 and a second portion 22, the first portion 21 and the second portion 22 cover each other, and the first portion 21 and the second portion 22 collectively define the accommodating space for accommodating the battery cell 10. The second portion 22 may be of a hollow structure with an opening at one end, and the first portion 21 may be of a plate-like structure, with the first portion 21 covering an opening side of the second portion 22 such that the first portion 21 and the second portion 22 collectively define the accommodating space. The first portion 21 and the second portion 22 may each be of a hollow structure with an opening at one end, with an opening side of the first portion 21 covering the opening side of the second portion 22. Of course, the box 20 formed by the first portion 21 and the second portion 22 may be of various shapes, such as a cylinder or a cuboid.

In the battery 100, there may be a plurality of battery cells 10, and the plurality of battery cells 10 may be connected in series, in parallel, or in parallel-series, and the parallel-series connection means that the plurality of battery cells 10 are connected in both series and parallel. The plurality of battery cells 10 may be directly connected together in series or in parallel or in parallel-series, and then the whole composed of the plurality of battery cells 10 may be accommodated within the box 20. Of course, the battery 100 may also be in the form that the plurality of battery cells 10 are firstly connected in series or in parallel or in parallel-series to form a battery module, and then a plurality of battery modules are connected in series or in parallel or in parallel-series to form a whole and are accommodated within the box 20. The battery 100 may further include other structures. For example, the battery 100 may further include a bus component for electrically connecting the plurality of battery cells 10.

The battery 100 in the embodiments of the present application includes a lithium-ion battery as the battery cell 10. In other embodiments, the battery 100 may further include therein any one or several of a lithium-sulfur battery, a sodium-ion battery, and a magnesium-ion battery, but is not limited thereto. The battery cell 10 may be in cylindrical, flat, cuboid shape, or in other shapes, or the like.

In some embodiments, the battery may be assembled into a battery module, the number of the batteries contained in the battery module may be one or more, and the specific number may be selected by those skilled in the art according to the application and capacity of the battery module.

Additionally, the present application further provides an electrical device, the electrical device including at least one of the battery cell or the battery provided in the present application. The battery cell or a battery pack may be used either as a power source for the electrical device or as an energy storage unit for the electrical device. The electrical device may include a mobile device (e.g., a mobile phone, a laptop, etc.), an electric vehicle (e.g., an all-electric vehicle, a hybrid electric vehicle, a plug-in hybrid electric vehicle, an electric bicycle, an electric scooter, an electric golf cart, an electric truck etc.), an electric train, ship, and satellite, an energy storage system, or the like, but is not limited thereto.

For the electrical device, the battery cell and/or battery may be selected according to the use requirements for the electrical device.

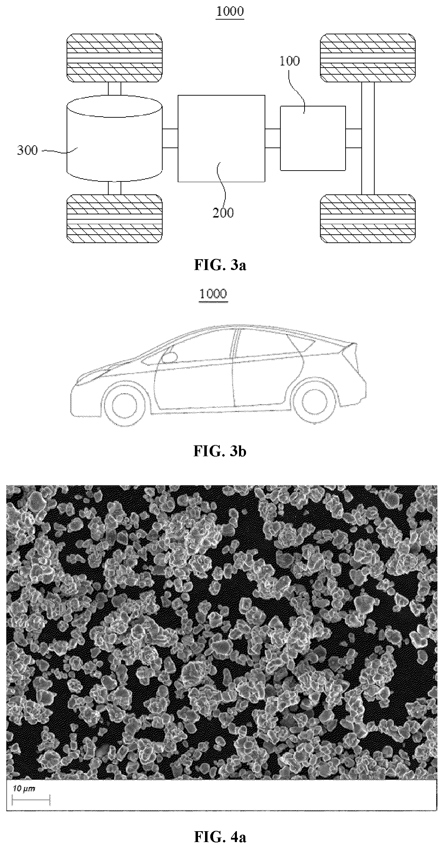

FIGS. 3a and 3b show an electrical device as an example. The electrical device may be an all-electric vehicle, a hybrid electric vehicle, a plug-in hybrid electric vehicle, or another vehicle. The schematic structural diagram of a vehicle 1000 is specifically provided. The vehicle 1000 is provided with a battery 100 inside, and the battery 100 may be provided at the bottom or head or tail of the vehicle 1000. The battery 100 may be used as a power supply for the vehicle 1000, for example, the battery 100 may be used as an operating power source for the vehicle 1000. The vehicle 1000 may further include a controller 200 and a motor 300. The controller 200 is configured to control the battery 100 to supply power to the motor 300, for example, to supply power for starting, navigation and driving of the vehicle 1000.

In some embodiments of the present application, the battery 100 may not only be used as an operating power source for the vehicle 1000, but also as a driving power source for the vehicle 1000, to replace or partially replace fuel or natural gas to provide driving power for the vehicle 1000.

Examples of the present application are illustrated below. The Examples described below are illustrative and only used to explain the present application, and cannot be construed as limiting the present application. In Examples in which no specific technologies or conditions are specified, technologies or conditions described in the literature in the art or product specifications are followed. The reagents or instruments used without manufacturer indicated are all commercially available conventional products.

### Example 1

Method of Preparation of Positive Electrode Plate:
A first lithium nickel cobalt manganese oxide (LiNi_{0.6}Co_{0.2}Mn_{0.2}O₂, abbreviated as N₆C₂M₂), a second lithium nickel cobalt manganese oxide (LiNi_{0.8}Co_{0.1}Mn_{0.1}O₂, abbreviated as N₈C₁M₁), conductive carbon black (Super-P), and polyvinylidene fluoride (PVDF) in a weight ratio of 90:10:3:1.5 were mixed with N,N-dimethylpyrrolidone (NMP), and stirred well to obtain a slurry for a positive electrode plate, and the slurry for the positive electrode plate was evenly applied to both sides of an aluminum foil. The electrode plate was cold pressed and sliced to obtain the positive electrode plate.

The first lithium nickel cobalt manganese oxide and the second lithium nickel cobalt manganese oxide were used as positive electrode active materials, the conductive carbon black (Super-P) was used as a conductive agent, the polyvinylidene fluoride (PVDF) was used as a binder, and the N,N-dimethylpyrrolidone (NMP) was used as a slurry solvent.

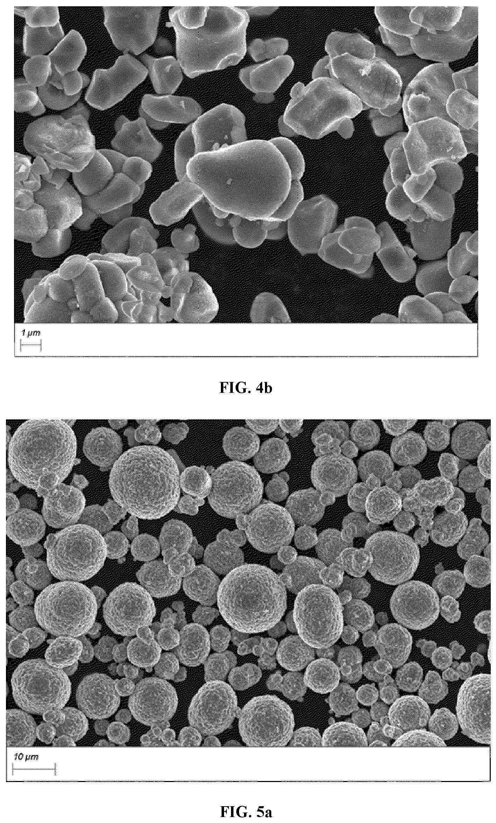

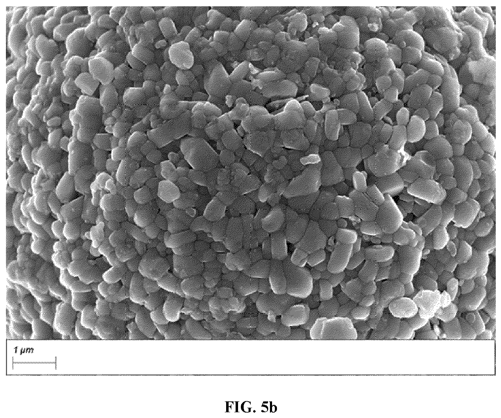

As shown in FIGS. 4a and 4b, a volume average particle size Dv50 of secondary particles of the first lithium nickel cobalt manganese oxide was 3.6 µm, and a volume average particle size Dv50 of primary particles of the first lithium nickel cobalt manganese oxide was 1.5 µm. As shown in FIGS. 5a and 5b, a volume average particle size Dv50 of secondary particles of the second lithium nickel cobalt manganese oxide was 10.5 µm, and a volume average particle size Dv50 of primary particles of the second lithium nickel cobalt manganese oxide was 300 µm. In an embodiment of the present application, the secondary particles of the first lithium nickel cobalt manganese oxide are angular particles. The secondary particles of the second lithium nickel cobalt manganese oxide are of a spherical structure with a smooth surface with respect to morphology. In this Example of the present application, a compacted density of the positive electrode plate was 3.5 g/cm³. In other Examples, the compacted density of the positive electrode plate may also be other numerical values between 2.8 g/cm³and 3.7 g/cm³.

In this Example of the present application, in the first lithium nickel cobalt manganese oxide, a molar content of nickel element among all transition metal elements was 0.6. In the second lithium nickel cobalt manganese oxide, a molar content of nickel element among all transition metal elements was 0.8. The contents of the nickel element of the first lithium nickel cobalt manganese oxide and the second lithium nickel cobalt manganese oxide were both known amounts. By performing a scanning electron microscopy test on the positive electrode plate and taking advantage of the different morphologies of the first lithium nickel cobalt manganese oxide and the second lithium nickel cobalt manganese oxide, with energy spectrum analysis (EDS) performed on the secondary particles with angular surfaces, the molar content of the nickel element in these secondary particles among all transition metal elements may be known; with energy spectrum analysis (EDS) performed on the secondary particles with smooth surfaces and spherical structure, the molar content of the nickel element in the secondary particles among all transition metal elements may be known. Of course, this Example of the present application imposed no limit on the specific testing method, and the molar content of the nickel element among all transition metal elements in the first lithium-nickel-cobalt-manganese oxide and the second lithium-nickel-cobalt-manganese oxide in the positive electrode active material may also be obtained by other methods.

Method of Preparation of Negative Electrode Plate:
In this Example of the present application, a negative electrode active material, a conductive agent, a thickener, and a binder were mixed with deionized water to form a slurry for a negative electrode plate. Specifically, in this Example of the present application, the negative electrode active material included a silicon-based material and a carbon-based material. The carbon-based material was artificial graphite and the silicon-based material was nano-silicon. The conductive agent was conductive carbon black (Super-P) and carbon nanotubes. The thickener was sodium carboxymethyl cellulose (CMC-Na). The binder was styrene butadiene rubber (SBR).

Specifically, in this Example of the present application, artificial graphite, nano-silicon, conductive carbon black (Super-P), carbon nanotubes, sodium carboxymethyl cellulose (CMC-Na), and styrene butadiene rubber (SBR) in a weight ratio of 95:5:0.5:0.1:1:1.5 were mixed with deionized water, and stirred well to obtain the slurry for coating the negative electrode plate. A viscosity may be regulated via deionized water during stirring. Then, the slurry was applied with a certain width to both sides of a negative electrode current collector, and was cold pressed and sliced to obtain the negative electrode plate. In this Example of the present application, the negative electrode current collector was a copper foil with a thickness of 6 µm. The examples of the present application do not limit the material and thickness of the negative electrode current collector.

Method of Preparation of Battery Cell:
The positive electrode plate, a separator, and the negative electrode plate were wound into a cell assembly, subjected to tab welding, aluminum case packaging, solution injection, encapsulating and formation, and suction shaping to obtain the battery cell. The cell assembly was 148 mm in width, 28 mm in thickness, and 98 mm in height, with a capacity of 60 Ah. The electrolytic solution injected was 1 mol/L of a solution of LiPF₆, solvents for the solution of LiPF₆ were ethylene carbonate (EC) and dimethyl carbonate (DMC), and ethylene carbonate (EC) and dimethyl carbonate (DMC) were in a volume ratio of 1:2. In this Example of the present application, the separator was of 7 µm thick polyethylene (PE). In this Example of the present application, an energy density of the negative electrode active material of the negative electrode plate was 1.07 times that of the positive electrode active material of the positive electrode plate.

The battery cell obtained in this Example of the present application included the positive electrode plate and the negative electrode plate. The positive electrode plate included a positive electrode active material. The positive electrode active material included a first lithium nickel cobalt manganese oxide (LiNi_{0.6}Co_{0.2}Mn_{0.2}O₂) and a second lithium nickel cobalt manganese oxide (LiNi_{0.8}Co_{0.1}Mn_{0.1}O₂). The negative electrode plate included a negative electrode active material, and the negative electrode active material included a silicon-based material and a carbon-based material. In the first lithium nickel cobalt manganese oxide (LiNi_{0.6}Co_{0.2}Mn_{0.2}O₂), a molar content of nickel element among all transition metal elements was 0.6. In the second lithium nickel cobalt manganese oxide (LiNi_{0.8}Co_{0.1}Mn_{0.1}O₂), a molar content of nickel element among all transition metal elements was 0.8.

### Example 2

A battery cell and a method of preparation of the battery cell according to this Example of the present application were different from those of Example 1 in that, in a method of preparation of a positive electrode plate, a first lithium nickel cobalt manganese oxide (LiNi_{0.6}Co_{0.2}Mn_{0.2}O₂, abbreviated as N₆C₂M₂), a second lithium nickel cobalt manganese oxide (LiNi_{0.8}Co_{0.1}Mn_{0.1}O₂, abbreviated as N₈C₁M₁), conductive carbon black (Super-P), and polyvinylidene fluoride (PVDF) were in a weight ratio of 80:20:3:1.5. Others were the same as in Example 1 and would not be repeated here.

### Example 3

A battery cell and a method of preparation of the battery cell according to this Example of the present application were different from those of Example 1 in that, in a method of preparation of a positive electrode plate, a first lithium nickel cobalt manganese oxide (LiNi_{0.6}Co_{0.2}Mn_{0.2}O₂, abbreviated as N₆C₂M₂), a second lithium nickel cobalt manganese oxide (LiNi_{0.8}Co_{0.1}Mn_{0.1}O₂, abbreviated as N₈C₁M₁), conductive carbon black (Super-P), and polyvinylidene fluoride (PVDF) were in a weight ratio of 75:25:3:1.5. Others were the same as in Example 1 and would not be repeated here.

### Example 4

A battery cell and a method of preparation of the battery cell according to this Example of the present application were different from those of Example 1 in that, in a method of preparation of a positive electrode plate, a first lithium nickel cobalt manganese oxide (LiNi_{0.6}Co_{0.2}Mn_{0.2}O₂, abbreviated as N₆C₂M₂), a second lithium nickel cobalt manganese oxide (LiNi_{0.8}Co_{0.1}Mn_{0.1}O₂, abbreviated as N₈C₁M₁), conductive carbon black (Super-P), and polyvinylidene fluoride (PVDF) were in a weight ratio of 70:30:3:1.5. Others were the same as in Example 1 and would not be repeated here.

### Example 5

A battery cell and a method of preparation of the battery cell according to this Example of the present application were different from those of Example 1 in that, in a method of preparation of a positive electrode plate, a first lithium nickel cobalt manganese oxide (LiNi_{0.6}Co_{0.2}Mn_{0.2}O₂, abbreviated as N₆C₂M₂), a second lithium nickel cobalt manganese oxide (LiNi_{0.8}Co_{0.1}Mn_{0.1}O₂, abbreviated as N₈C₁M₁), conductive carbon black (Super-P), and polyvinylidene fluoride (PVDF) were in a weight ratio of 60:40:3:1.5. Others were the same as in Example 1 and would not be repeated here.

### Example 6

A battery cell and a method of preparation of the battery cell according to this Example of the present application were different from those of Example 1 in that, in a method of preparation of a positive electrode plate, a first lithium nickel cobalt manganese oxide (LiNi_{0.6}Co_{0.2}Mn_{0.2}O₂, abbreviated as N₆C₂M₂), a second lithium nickel cobalt manganese oxide (LiNi_{0.8}Co_{0.1}Mn_{0.1}O₂, abbreviated as N₈C₁M₁), conductive carbon black (Super-P), and polyvinylidene fluoride (PVDF) were in a weight ratio of 50:50:3:1.5. Others were the same as in Example 1 and would not be repeated here.

### Example 7

A battery cell and a method of preparation of the battery cell according to this Example of the present application were different from those of Example 1 in that, in a method of preparation of a positive electrode plate, a first lithium nickel cobalt manganese oxide (LiNi_{0.6}Co_{0.2}Mn_{0.2}O₂, abbreviated as N₆C₂M₂), a second lithium nickel cobalt manganese oxide (LiNi_{0.8}Co_{0.1}Mn_{0.1}O₂, abbreviated as N₈C₁M₁), conductive carbon black (Super-P), and polyvinylidene fluoride (PVDF) were in a weight ratio of 70:30:3:1.5. In a method of preparation of a negative electrode plate, artificial graphite, nano-silicon, conductive carbon black (Super-P), carbon nanotubes, sodium carboxymethyl cellulose (CMC-Na), and styrene butadiene rubber (SBR) were in a weight ratio of 90:10:0.5:0.1:1:1.5. Others were the same as in Example 1 and would not be repeated here.

### Example 8

A battery cell and a method of preparation of the battery cell according to this Example of the present application were different from those of Example 1 in that, in a method of preparation of a positive electrode plate, a first lithium nickel cobalt manganese oxide (LiNi_{0.6}Co_{0.2}Mn_{0.2}O₂, abbreviated as N₆C₂M₂), a second lithium nickel cobalt manganese oxide (LiNi_{0.8}Co_{0.1}Mn_{0.1}O₂, abbreviated as N₈C₁M₁), conductive carbon black (Super-P), and polyvinylidene fluoride (PVDF) were in a weight ratio of 60:40:3:1.5. In a method of preparation of a negative electrode plate, artificial graphite, nano-silicon, conductive carbon black (Super-P), carbon nanotubes, sodium carboxymethyl cellulose (CMC-Na), and styrene butadiene rubber (SBR) were in a weight ratio of 90:10:0.5:0.1:1:1.5. Others were the same as in Example 1 and would not be repeated here.

### Example 9

A battery cell and a method of preparation of the battery cell according to this Example of the present application were different from those of Example 1 in that, in a method of preparation of a positive electrode plate, a first lithium nickel cobalt manganese oxide (LiNi_{0.6}Co_{0.2}Mn_{0.2}O₂, abbreviated as N₆C₂M₂), a second lithium nickel cobalt manganese oxide (LiNi_{0.8}Co_{0.1}Mn_{0.1}O₂, abbreviated as N₈C₁M₁), conductive carbon black (Super-P), and polyvinylidene fluoride (PVDF) were in a weight ratio of 50:50:3:1.5. In a method of preparation of a negative electrode plate, artificial graphite, nano-silicon, conductive carbon black (Super-P), carbon nanotubes, sodium carboxymethyl cellulose (CMC-Na), and styrene butadiene rubber (SBR) were in a weight ratio of 90:10:0.5:0.1:1:1.5. Others were the same as in Example 1 and would not be repeated here.

### Example 10

A battery cell and a method of preparation of the battery cell according to this Example of the present application were different from those of Example 1 in that, in a method of preparation of a positive electrode plate, a first lithium nickel cobalt manganese oxide had a structural formula of LiNi_{0.5}Co_{0.2}Mn_{0.3}O₂, abbreviated as N₅C₂M₃. A second lithium nickel cobalt manganese oxide had a structural formula of LiNi_{0.85}Co_{0.1}Mn_{0.05}O₂, abbreviated as N_{8.5}C₁M_{0.5}. The first lithium nickel cobalt manganese oxide, the second lithium nickel cobalt manganese oxide, conductive carbon black (Super-P), and polyvinylidene fluoride (PVDF) were in a weight ratio of 75:25:3:1.5. In the first lithium nickel cobalt manganese oxide (LiNi_{0.5}Co_{0.2}Mn_{0.3}O₂), a molar content of nickel element among all transition metal elements was 0.5. In the second lithium nickel cobalt manganese oxide (LiNi_{0.85}Co_{0.1}Mn_{0.05}O₂), a molar content of nickel element among all transition metal elements was 0.85. Others were the same as in Example 1 and would not be repeated here.

### Example 11

A battery cell and a method of preparation of the battery cell according to this Example of the present application were different from those of Example 1 in that, in a method of preparation of a positive electrode plate, a first lithium nickel cobalt manganese oxide had a structural formula of LiNi_{0.7}Co_{0.1}Mn_{0.2}O₂, abbreviated as N₇C₁M₂. A second lithium nickel cobalt manganese oxide had a structural formula of LiNi_{0.9}Co_{0.05}Mn_{0.05}O₂, abbreviated as N₉C_{0.5}M_{0.5}. The first lithium nickel cobalt manganese oxide, the second lithium nickel cobalt manganese oxide, conductive carbon black (Super-P), and polyvinylidene fluoride (PVDF) were in a weight ratio of 75:25:3:1.5. In the first lithium nickel cobalt manganese oxide (LiNi_{0.7}Co_{0.1}Mn_{0.2}O₂), a molar content of nickel element among all transition metal elements was 0.7. In the second lithium nickel cobalt manganese oxide (LiNi_{0.9}Co_{0.05}Mn_{0.05}O₂), a molar content of nickel element among all transition metal elements was 0.9. Others were the same as in Example 1 and would not be repeated here.

### Example 12

A battery cell and a method of preparation of the battery cell according to this Example of the present application were different from those of Example 1 in that, in a method of preparation of a positive electrode plate, a first lithium nickel cobalt manganese oxide had a structural formula of LiNi_{0.75}Co_{0.5}Mn_{0.2}O₂, abbreviated as N_{7.5}C_{0.5}M₂. A second lithium nickel cobalt manganese oxide had a structural formula of LiNi_{0.98}Co_{0.01}Mn_{0.01}O₂, abbreviated as N_{9.8}C_{0.1}M_{0.1}. The first lithium nickel cobalt manganese oxide, the second lithium nickel cobalt manganese oxide, conductive carbon black (Super-P), and polyvinylidene fluoride (PVDF) were in a weight ratio of 75:25:3:1.5. In the first lithium nickel cobalt manganese oxide (LiNi_{0.75}Co_{0.5}Mn_{0.2}O₂), a molar content of nickel element among all transition metal elements was 0.75. In the second lithium nickel cobalt manganese oxide (LiNi_{0.98}Co_{0.01}Mn_{0.01}O₂), a molar content of nickel element among all transition metal elements was 0.98. Others were the same as in Example 1 and would not be repeated here.

### Example 13

A battery cell and a method of preparation of the battery cell according to this Example of the present application were different from those of Example 1 in that, in a method of preparation of a negative electrode plate, a silicon-based material was silicon monoxide. Artificial graphite, the silicon monoxide, conductive carbon black (Super-P), carbon nanotubes, sodium carboxymethyl cellulose (CMC-Na), and styrene butadiene rubber (SBR) were in a weight ratio of 95:7.5:0.5:0.1:1:1.5. Others were the same as in Example 1 and would not be repeated here.

### Comparative Example 1

A battery cell and a method of preparation of the battery cell according to this Comparative Example were different from those of Example 1 in that, in a method of preparation of a positive electrode plate, a first lithium nickel cobalt manganese oxide (LiNi_{0.6}Co_{0.2}Mn_{0.2}O₂, abbreviated as N₆C₂M₂), a second lithium nickel cobalt manganese oxide (LiNi_{0.8}Co_{0.1}Mn_{0.1}O₂, abbreviated as N₈C₁M₁), conductive carbon black (Super-P), and polyvinylidene fluoride (PVDF) were in a weight ratio of 100:0:3:1.5. That is, a positive electrode active material in this Comparative Example was the first lithium nickel cobalt manganese oxide LiNi_{0.6}Co_{0.2}Mn_{0.2}O₂, and was free of the second lithium nickel cobalt manganese oxide. Others were the same as in Example 1 and would not be repeated here.

### Comparative Example 2

A battery cell and a method of preparation of the battery cell according to this Comparative Example were different from those of Example 1 in that, in a method of preparation of a positive electrode plate, a first lithium nickel cobalt manganese oxide (LiNi_{0.6}Co_{0.2}Mn_{0.2}O₂, abbreviated as N₆C₂M₂), a second lithium nickel cobalt manganese oxide (LiNi_{0.8}Co_{0.1}Mn_{0.1}O₂, abbreviated as N₈C₁M₁), conductive carbon black (Super-P), and polyvinylidene fluoride (PVDF) were in a weight ratio of 100:0:3:1.5. That is, a positive electrode active material in this Comparative Example was the first lithium nickel cobalt manganese oxide LiNi_{0.6}Co_{0.2}Mn_{0.2}O₂, and was free of the second lithium nickel cobalt manganese oxide. In a method of preparation of a negative electrode plate, artificial graphite, nano-silicon, conductive carbon black (Super-P), carbon nanotubes, sodium carboxymethyl cellulose (CMC-Na), and styrene butadiene rubber (SBR) were in a weight ratio of 90:10:0.5:0.1:1:1.5. Others were the same as in Example 1 and would not be repeated here.

### Comparative Example 3

A battery cell and a method of preparation of the battery cell according to this Comparative Example were different from those of Example 1 in that, in a method of preparation of a positive electrode plate, a first lithium nickel cobalt manganese oxide (LiNi_{0.6}Co_{0.2}Mn_{0.2}O₂, abbreviated as N₆C₂M₂), a second lithium nickel cobalt manganese oxide (LiNi_{0.7}Co_{0.1}Mn_{0.2}O₂, abbreviated as N₇C₁M₂), conductive carbon black (Super-P), and polyvinylidene fluoride (PVDF) were in a weight ratio of 75:25:3:1.5. That is, the molar content of nickel element in the second lithium nickel cobalt manganese oxide of a positive electrode active material among all transition metal elements in this Comparative Example was 0.7, and less than 0.8. Others were the same as in Example 1 and would not be repeated here.

A battery performance test was performed on the battery cells of the above Examples 1-13 and Comparative Examples 1-3. Specifically, a battery cell cycling capacity retention rate test was performed. The specific test conditions were as follows.

At 25°C, charging was performed at a constant current of nominal 1/3 C (nominal capacity) to an end voltage of 4.4 V, and then at a constant voltage to nominal 0.05 C. After standing for 5 min, discharging was performed at nominal 1/3 C to a discharge cutoff voltage of 2.5 V, a discharge energy E and a capacity C were obtained, and the obtained capacity was denoted as an initial capacity C₀. The above steps were repeated for the same battery cell, a discharge capacity Cₙ of the battery after the n-th cycle was recorded, and then a battery capacity retention rate after each cycle was Pₙ = Cₙ / C₀ x 100%. During this test, a first cycle corresponded to n = 1, a second cycle corresponded to n = 2, ..., and a 1500th cycle corresponded to n = 1500. The corresponding battery capacity retention data in Table 1 was data measured after 1500 cycles under the above test conditions.

The following are known according to the test results in Table 1. (1) The cycling capacity retention rates of the battery cells of Examples 1 to 13 are good, ranging from 81% to 93.5%. The positive electrode active material of Comparative Examples 1 and 2 is the first lithium-nickel-cobalt-manganese oxide N₆C₂M₂ with a low nickel content. When the negative electrode active material includes a silicon-based material and a carbon-based material, its cycling capacity retention rate is between 60% and 80%. Specifically, in the first lithium-nickel-cobalt-manganese oxide, the molar content of the nickel element among all transition metal elements is 0.6, and less than 0.8. The positive electrode active material of Comparative Example 3 includes the lithium-nickel-cobalt-manganese oxide N₆C₂M₂ with a low nickel content and the lithium-nickel-cobalt-manganese oxide N₇C₁M₂ with a low nickel content, that is, in the two lithium-nickel-cobalt-manganese oxides, the molar content of the nickel element among all transition metal elements is less than 0.8, and the cycling capacity retention rate of the battery cell is 80%. The cycling capacity retention rates of the battery cells of Examples 1 to 13 are all higher than those of Comparative Examples 1 to 3. It is demonstrated that with the positive electrode active materials of Examples 1 to 13 of the present application added a second lithium-nickel-cobalt-manganese oxide with a high nickel content, where the molar content of the nickel element in the second lithium-nickel-cobalt-manganese oxide among all transition metal elements is greater than or equal to 0.8, the battery capacity retention rates of the battery cells may be improved. After the battery cells cycle 1500 times, the battery cell cycling capacity retention rates may be up to 93.5%.

**Table 1: Parameters and Performance Test Results for Examples 1-13 and Comparative Examples 1-3**

| | Carbon parts by weight | Silicon parts by weight | X1 | NCM1 | NCM2 | NCM1: NCM2 | X2 | Y | Cycling capacity retention rate |
|---|---|---|---|---|---|---|---|---|---|
| Example 1 | 95 | 5 | 5% | N₆C₂M₂ | N₈C₁M₁ | 90:10 | 10% | 2 | 85% |
| Example 2 | 95 | 5 | 5% | N₆C₂M₂ | N₈C₁M₁ | 80:20 | 20% | 4 | 89% |
| Example 3 | 95 | 5 | 5% | N₆C₂M₂ | N₈C₁M₁ | 75:25 | 25% | 5 | 93% |
| Example 4 | 95 | 5 | 5% | N₆C₂M₂ | N₈C₁M₁ | 70:30 | 30% | 6 | 90% |
| Example 5 | 95 | 5 | 5% | N₆C₂M₂ | N₈C₁M₁ | 60:40 | 40% | 8 | 87% |
| Example 6 | 95 | 5 | 5% | N₆C₂M₂ | N₈C₁M₁ | 50:50 | 50% | 10 | 83% |
| Example 7 | 90 | 10 | 10% | N₆C₂M₂ | N₈C₁M₁ | 70:30 | 30% | 3 | 85% |
| Example 8 | 90 | 10 | 10% | N₆C₂M₂ | N₈C₁M₁ | 60:40 | 40% | 4 | 83% |
| Example 9 | 90 | 10 | 10% | N₆C₂M₂ | N₈C₁M₁ | 50:50 | 50% | 5 | 81% |
| Example 10 | 95 | 5 | 5% | N₅C₂M₃ | N_{8.5}C₁M_{0.5} | 75:25 | 25% | 5 | 93.5% |
| Example 11 | 95 | 5 | 5% | N₇C₁M₂ | N₉C_{0.5}M_{0.5} | 75:25 | 25% | 5 | 92.5% |
| Example 12 | 95 | 5 | 5% | N_{7.5}C_{0.5}M₂ | N_{9.8}C_{0.1}M_{0.1} | 75:25 | 25% | 5 | 91% |
| Example 13 | 95 | 7.5 | 5% | N₆C₂M₂ | N₈C₁M₁ | 75:25 | 25% | 5 | 92% |
| Comparative Example 1 | 95 | 5 | 5% | N₆C₂M₂ | - | | 0 | 0 | 80% |
| Comparative Example 2 | 90 | 10 | 10% | N₆C₂M₂ | - | | 0 | 0 | 70% |
| Comparative Example 3 | 95 | 5 | 5% | N₆C₂M₂ | N₇C₁M₂ | 75:25 | 25 | 5 | 80% |

| | | | | | | | | | |
|---|---|---|---|---|---|---|---|---|---|
| Note: carbon parts by weight are parts by weight of the carbon-material in the negative electrode material; silicon parts by weight are parts by weight of the silicon-based material in the negative electrode material; NCM1:NCM2 is a weight ratio of NCM1 to NCM2; X1 represents a mass fraction of the silicon element in the negative electrode active material; X2 represents a mass fraction of the second lithium-nickel-cobalt-manganese oxide in the positive electrode active material; Y represents a ratio of the mass fraction of the second lithium-nickel-cobalt-manganese oxide in the positive electrode active material to that of the silicon element in the negative electrode active material, i.e. Y = X2 / X1. | | | | | | | | | |

(2) It can be seen from the test results of Examples 1 to 3 that, with the same negative electrode active material and the same X1, as the content of the second lithium-nickel-cobalt-manganese oxide (NCM2) in the positive electrode active material increases, the battery cell cycling capacity retention rate gradually increases. When the ratio Y of the mass fraction of the second lithium-nickel-cobalt-manganese oxide (NCM2) in the positive electrode active material to that of silicon element in the negative electrode active material reaches 5, the cycling capacity retention rate may be up to 93%. This indicates that as the content of the second lithium-nickel-cobalt-manganese oxide (NCM2) in the positive electrode active material increases, the voids created by the shrinkage of the lattice of the second lithium-nickel-cobalt-manganese oxide (NCM2) in the positive electrode active material increase during charging; the voids created by the positive electrode plate increase, such that the electrolytic solution squeezed out due to the expansion of the negative electrode silicon-based material enters the voids created by the positive electrode plate, which facilitates reflux of the electrolytic solution from the voids created by the positive electrode plate to the negative electrode during discharging, facilitates the reflux of the electrolytic solution, reduces lithium plating during charging, and thus allows for improvement in the cycling capacity retention rate. When the value for Y reaches 5, the volume of the voids created by the positive electrode plate is equal to or similar to that of the electrolytic solution squeezed out by the expansion of the negative electrode plate, such that the volume of the voids for storing the electrolytic solution reaches a good state and the battery's cycling capacity retention rate reaches a good level.

It can be seen from the test results of Examples 4 to 6 and Comparative Example 1 that, with the same negative electrode active material and the same X1, as the content of the second lithium-nickel-cobalt-manganese oxide (NCM2) in the positive electrode active material further increases, the cycling capacity retention rate exhibits a decrease trend; when the value for Y reaches 10, the cycling capacity retention rate is reduced to 83%. This indicates that in the positive electrode active material of the positive electrode plate, as the content of the second lithium-nickel-cobalt-manganese oxide (NCM2) increases (X2 increases), the value for Y increases; instability of the second lithium-nickel-cobalt-manganese oxide (NCM2) in the positive electrode active material increases has increased influence on the cycling capacity retention rate of the battery cell, such that the cycling capacity retention rate of the battery cell weakens to a certain extent. In Comparative Example 1, the positive electrode active material is free of the second lithium-nickel-cobalt-manganese oxide (NCM2), and its cycling capacity retention rate is 80%. Examples 1 to 6 show that when 0 < Y ≤ 10, the cycling capacity retention rate of the battery cell is improved and the cycling capacity retention rate may reach 83%-93%. When 4 ≤ Y ≤ 6, the cycling capacity retention rate of the battery cell is up to 89%-93% and the cycling capacity retention rate is greatly increased. When 0 < X2 ≤ 50%, the cycling capacity retention rate of the battery cell is improved.

(3) It can be seen from Example 2, Example 8, Comparative Example 1, and Comparative Example 2 that, on the basis that the positive electrode active material is free of the second lithium-nickel-cobalt-manganese oxide (NCM2) in Comparative Example 1 and Comparative Example 2, when X1 = 5%, the cycling capacity of the battery cell is 80%; when X1 = 10%, the cycling capacity of the battery cell is 70%. The positive electrode active materials for Example 2 and Example 8 each include the first lithium-nickel-cobalt-manganese oxide (NCM1) and the second lithium-nickel-cobalt-manganese oxide (NCM2). Where Y has the same value of 4, when X1 is 5%, the cycling capacity retention rate is 89%, which is higher than 80% for Comparative Example 1; when X1 is 10%, the cycling capacity retention rate is 83%, which is higher than 70% for Comparative Example 2. Where Y has the same value and 0 < X1 ≤ 10%, the cycling capacity retention rate of the battery cell is increased. Specifically, where Y = 4 and 0 < X1 ≤ 10%, the cycling capacity retention rate is up to 83%-89%.

(4) Examples 7 to 9 and Comparative Example 2 show that, where X1 = 10% and when 0 < X2 ≤ 50%, the cycling capacity retention rate of the battery cell is improved, and the cycling capacity retention rate is 81%-85%, which is higher than the cycling capacity retention rate of 70% with the positive electrode active material is free of the second lithium-nickel-cobalt-manganese oxide (NCM2).

(5) In Examples 3, and 10 to 12, where the positive electrode active materials each contains the second lithium-nickel-cobalt-manganese oxide (NCM2), the negative electrode active materials are the same (all being artificial graphite and nano-silicon), X1 is the same (each being 5%), X2 is the same (each being 25%) and Y is the same (each being 5), the second lithium-nickel-cobalt-manganese oxides (NCM2) in the positive electrode active materials are different; in the second lithium-nickel-cobalt-manganese oxides, the molar contents of the nickel element among all transition metal elements increase successively and are greater than or equal to 0.8; the cycling capacity retention rate of the battery cell is between 91% and 93.5%, tending to increase and then decrease; when the molar contents of the nickel element among all transition metal elements are 0.8, the cycling capacity retention rate of the battery cell is 93%; when the molar contents of the nickel element among all transition metal elements are 0.85, the cycling capacity retention rate of the battery cell reaches the highest, and is up to 93.5%; when the molar contents of the nickel element among all transition metal elements are 0.98, the cycling capacity retention rate of the battery cell decreases to 91%.

It should be noted that the present application is not limited to the above embodiments. The above embodiments are only examples, and embodiments that have the same composition and exert the same effect as the technical ideas within the scope of the technical solution of the present application are included in the technical scope of the present application. In addition, without departing from the scope of the main intention of the present application, various modifications that can be conceived by those skilled in the art are applied to the embodiments, and other modes constructed by combining some of the constituent elements of the embodiments are also included within the scope of the present application.

## Claims

1. A battery cell, comprising:
a positive electrode plate, the positive electrode plate comprising a positive electrode active material, the positive electrode active material comprising a first lithium-nickel-cobalt-manganese oxide and a second lithium-nickel-cobalt-manganese oxide, a molar content of nickel element in the second lithium-nickel-cobalt-manganese oxide among all its transition metal elements is greater than that of nickel element in the first lithium-nickel-cobalt-manganese oxide among all its transition metal elements, wherein in the second lithium-nickel-cobalt-manganese oxide, the molar content of the nickel element among all transition metal elements is greater than or equal to 0.8;
and a negative electrode plate, the negative electrode plate comprising a negative electrode active material, the negative electrode active material comprising a silicon-based material and a carbon-based material.

2. The battery cell according to claim 1, wherein
a ratio of a mass fraction of the second lithium-nickel-cobalt-manganese oxide in the positive electrode active material to that of silicon element in the negative electrode active material is less than or equal to 10 and greater than 0.

3. The battery cell according to claim 1 or 2, wherein
the ratio of the mass fraction of the second lithium-nickel-cobalt-manganese oxide in the positive electrode active material to that of the silicon element in the negative electrode active material is less than or equal to 6, and greater than or equal to 4.

4. The battery cell according to any one of claims 1 to 3, wherein
the mass fraction of the second lithium-nickel-cobalt-manganese oxide in the positive electrode active material is less than or equal to 50%, and greater than 0.

5. The battery cell according to any one of claims 1 to 4, wherein
the mass fraction of the silicon element in the negative electrode active material is less than or equal to 10%, and greater than 0.

6. The battery cell according to any one of claims 1 to 5, wherein
in the first lithium-nickel-cobalt-manganese oxide, the molar content of the nickel element among all transition metal elements is less than or equal to 0.75, and greater than or equal to 0.5.

7. The battery cell according to any one of claims 1 to 6, wherein
the first lithium-nickel-cobalt-manganese oxide comprises a first lithium nickel cobalt manganese oxide or a doped modified material of the first lithium nickel cobalt manganese oxide or a surface modified material of the first lithium nickel cobalt manganese oxide, and the first lithium nickel cobalt manganese oxide has a structural formula of LiNiₓCo_{y}Mn_{z}O₂, wherein 0.5 ≤ x ≤ 0.75, 0.03 ≤ y ≤ 0.3, and 0.2 ≤ z ≤ 0.4.

8. The battery cell according to any one of claims 1 to 7, wherein
the second lithium-nickel-cobalt-manganese oxide comprises a second lithium nickel cobalt manganese oxide or a doped modified material of the second lithium nickel cobalt manganese oxide or a surface modified material of the second lithium nickel cobalt manganese oxide, and the second lithium nickel cobalt manganese oxide has a structural formula of LiNiₐCo_{b}Mn_{c}O₂, where 0.8 ≤ a ≤ 0.98, 0.01 ≤ b ≤ 0.15, and 0.01 ≤ c ≤ 0.15.

9. The battery cell according to any one of claims 1 to 8, wherein
a volume average particle size Dv50 of secondary particles of the first lithium-nickel-cobalt-manganese oxide is 3 microns to 5 microns; and/or
a volume average particle size Dv50 of secondary particles of the second lithium-nickel-cobalt-manganese oxide is 8 microns to 12 microns.

10. The battery cell according to any one of claims 1 to 9, wherein
a volume average particle size Dv50 of primary particles of the first lithium-nickel-cobalt-manganese oxide ranges from 1 micron to 3 microns; and/or
a volume average particle size Dv50 of primary particles of the second lithium-nickel-cobalt-manganese oxide ranges from 100 nanometers to 500 nanometers.

11. The battery cell according to any one of claims 1 to 10, wherein
a compacted density of the positive electrode plate is 2.8 g/cm³-3.7 g/cm³.

12. The battery cell according to any one of claims 1 to 11, wherein
the silicon-based material comprises any one or several of silicon, a silicon-carbon composite material, silicon monoxide, and a silicon monoxide-carbon composite material.

13. The battery cell according to any one of claims 1 to 12, wherein
the carbon-based material comprises graphite.

14. A battery, comprising the battery cell according to any one of claims 1 to 13.

15. An electrical device, comprising the battery cell according to any one of claims 1 to 13 and/or the battery according to claim 14.
